# EUROPEAN PATENT SPECIFICATION

(11) **EP 4 426 951 B1**
(45) Date of publication and mention of the grant of the patent: **06.08.2025**
(21) Application number: 22814288.1
(22) Date of filing: 01.11.2022
(51) Int. Cl.: F04D 29/10, F16J 15/44, F04D 17/12, F04D 19/02

(54) **CONICAL SEALING ASSEMBLY FOR A ROTARY EQUIPMENT AND ROTARY EQUIPMENT COMPRISING THE SEALING ASSEMBLY**
KONISCHE DICHTUNGSANORDNUNG FÜR EINE DREHAUSRÜSTUNG UND DREHAUSRÜSTUNG MIT DER DICHTUNGSANORDNUNG
ENSEMBLE D'ÉTANCHÉITÉ CONIQUE POUR ÉQUIPEMENT ROTATIF ET ÉQUIPEMENT ROTATIF DOTÉ DUDIT ENSEMBLE D'ÉTANCHÉITÉ

(30) Priority: 05.11.2021 IT 202100028247
(43) Date of publication of application: 11.09.2024
(73) Proprietor: NUOVO PIGNONE TECNOLOGIE - S.R.L., 50127 Florence (IT)
(72) Inventor: GAMBERI, Francesco, 50127 Florence (IT); BERGAMINI, Lorenzo, 50127 Florence (IT); RIZZO, Emanuele, 50127 Florence (IT); MASI, Guido, 50127 Florence (IT)
(74) Representative: Novagraaf Group
(86) International application number: PCT/EP2022/025490
(87) International publication number: WO 2023/088579

(56) References cited:
- GB-A- 1 449 608
- GB-A- 2 329 432
- US-A1- 2007 065 276
- US-A1- 2013 140 774
- US-A1- 2014 232 071

## Description

### TECHNICAL FIELD

Disclosed herein are sealing assemblies for rotary equipment, such as, but not limited to turbomachinery.

### BACKGROUND ART

Turbomachines, such as but not limited to centrifugal and axial compressors require rotary seals to prevent or limit fluid leakages towards the bearings or towards the environment.

A variety of shaft sealing devices have been developed for this purpose, among which labyrinth seals, oil fill seals, mechanical contact seals, and dry gas seals. US 2014/232071 A1 discloses a shaft seal assembly. US 2013/140774 A1 discloses an annular seal apparatus. GB 2 329 432 A discloses a seal for a pump shaft.

Dry gas seals comprise a stationary ring and a rotating ring adapted to rotate integrally with the shaft. Dry seal gas, which is typically the same process gas flowing through the rotary equipment, is injected in the seal to provide a barrier against gas leakage. Most of the dry seal gas flows across an inboard labyrinth seal back into the machine, and a minor part of the dry seal gas flows as a primary or secondary vent from the dry gas seal and is either recovered or flared.

While providing excellent sealing properties, dry gas seals are not free of drawbacks, such as, for example, the need to provide seal gas also while the rotary equipment is at stillstand. Moreover, the flowrate of the vented seal gas is relatively high, which may result in severe environmental impact or loss of valuable gaseous components, if the vented seal gas is not recovered.

Attempts to overcome the drawbacks have been made, using stationary porous sealing members co-acting with rotary sealing members. Pressurized seal gas is fed to the porous sealing member and migrates thereacross towards an interface between the stationary porous sealing member and the rotating sealing member. These sealing assemblies using porous sealing members suffer from some drawbacks. In particular the small length of the flow path of the leak causes relatively high leak rate.

It would therefore be desirable to provide sealing assemblies using porous sealing members, which overcome or alleviate at least some of the drawbacks and limitations of the seal assemblies of the prior art.

### SUMMARY

A shaft seal assembly is disclosed, which is configured to sealingly separate a high-pressure region and a low-pressure region in a rotary equipment, such as a compressor or another turbomachine. As used herein, the term rotary equipment may include any machinery having an outer casing and a shaft supported for rotation in the casing. The shaft seal assembly includes a rotary seal member adapted to be drivingly coupled to a rotary shaft for co-rotation therewith, and a stationary porous seal member adapted to be coupled to a stationary housing of the rotary equipment and extending around the rotary seal member. The shaft seal assembly further includes at least one seal gas inlet port adapted to deliver pressurized seal gas to the stationary porous seal member. The rotary seal member has a conical outer sealing surface (i.e. a convex conical sealing surface) and the stationary porous seal member has a conical inner sealing surface (i.e. a concave conical sealing surface). The conical inner sealing surface faces the conical outer sealing surface.

In currently preferred embodiments disclosed herein, each of the above mentioned conical outer sealing surface and conical inner sealing surface has a respective first end adapted to face the high-pressure region and a second end adapted to face the low-pressure region, when the shaft seal assembly is mounted in the rotary equipment. Each said first end has a diameter larger than the corresponding second end.

Further features and embodiments of the seal assembly will be described below and are set forth in the attached claims.

According to a further aspect, disclosed herein is a rotary equipment, such as for example a turbomachine, wherein a high-pressure region and a low-pressure region shall are sealingly separated from one another. At least one or more shaft seal assemblies as outlined above can be arranged along the rotary shaft between the high-pressure region and the low-pressure region.

### BRIEF DESCRIPTION OF THE DRAWINGS

Reference is now made briefly to the accompanying drawings, in which:
Fig.1 is a schematic arrangement of a turbomachine with shaft seal assemblies according to the present disclosure;
Fig.2 is a sectional view of a shaft seal assembly according to the present disclosure in one embodiment; and
Fig.3 is a sectional view of a shaft seal assembly according to the present disclosure in a further embodiment.

### DETAILED DESCRIPTION

The following description refers specifically to turbomachines and more specifically to dynamic compressors, such as axial or centrifugal compressors, and pumps. It shall however be understood that novel features of the present disclosure can be used with advantage to provide efficient shaft sealing in other kinds of rotary equipment, such as turbines, expanders, and other rotating machinery where a high-pressure side or region and a low-pressure side or region shall be sealingly separated from one another.

To provide efficient sealing along a rotary shaft in a turbomachine, a new seal assembly for use in rotary equipment has a rotary conical surface that co-acts with a stationary conical surface, i.e. a non-rotating conical surface. The stationary conical surface surrounds the rotary conical surface. The stationary conical surface is formed in a porous body, through which pressurized seal gas can flow. A gap or space between the stationary conical surface and the rotary conical surface forms under the combined action of the pressurized seal gas and a resilient axial force applied on the stationary conical surface.

With "axial force" a force is understood, which is oriented in the direction of a geometrical axis of the stationary conical surface and of the rotary conical surface. Said axis is substantially coincident with the rotation axis of the shaft, on which the seal assembly is mounted.

The resilient axial force is oriented to push the stationary conical surface against the rotary conical surface in a direction of the rotation axis of the rotary shaft of the turbomachine. This achieves an efficient separation between the high-pressure region and the low-pressure region with a minimum flowrate of seal gas.

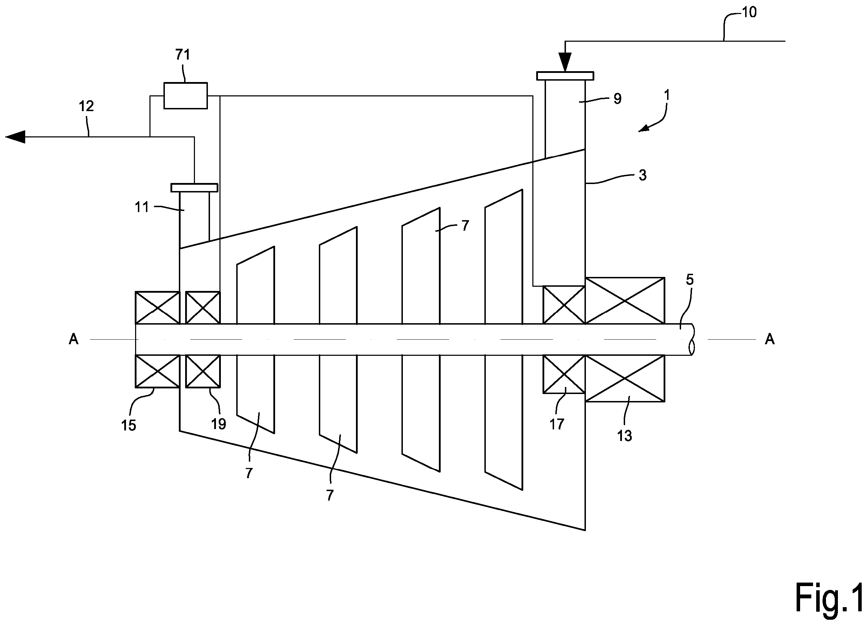

Turning now to the drawings, Fig.1 schematically illustrates a turbomachine 1, for instance a centrifugal compressor, comprising a casing 3 and a rotary shaft 5 supported for rotation in the casing 3. Impellers 7 rotate with the rotary shaft 5 around a rotation axis A-A of the rotary shaft 5. Process gas flows to the compressor 1 through a suction side 9 fluidly coupled to an inlet line 10. Pressurized process gas is delivered by the compressor 1 at a delivery side 11 and flows in an outlet line 12.

The rotary shaft 5 is supported by bearings, schematically shown at 13 and 15. Seal assemblies 17 and 19 are arranged along the rotary shaft 5, inboard the bearings 13 and 15, to prevent process gas from leaking along the rotary shaft 5 through the bearings 13, 15 and towards the environment. In further embodiments, not shown, additional seal assemblies can be arranged between adjacent compressor stages inside the casing 3.

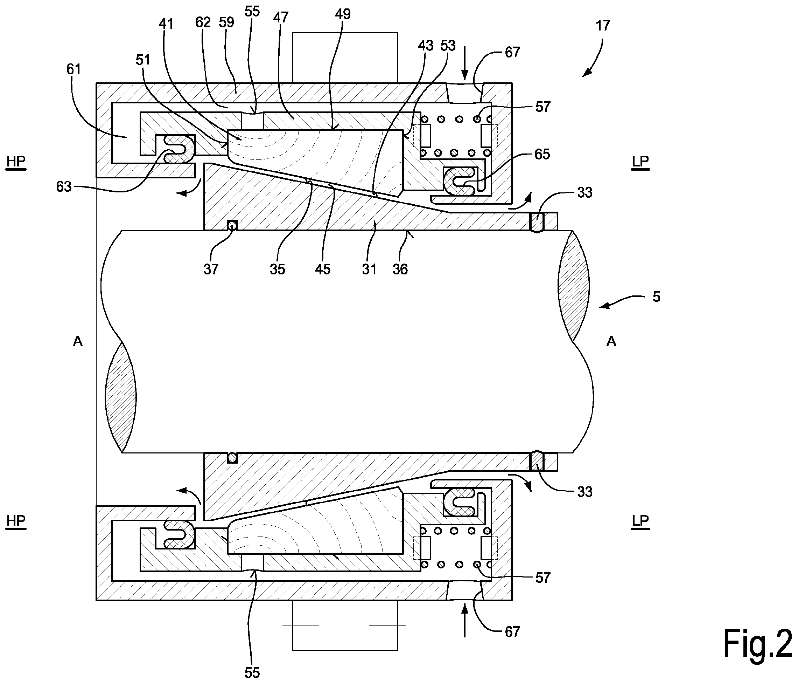

Fig. 2 illustrates an embodiment of the seal assembly 17 of the present disclosure. The seal assembly 19 can be configured in substantially the same way as the seal assembly 17.

In general terms, the seal assembly 17 is arranged between a high-pressure region HP and a low pressure region LP, for instance between the most upstream compressor stage and the bearing 13, or between the most downstream compressor stage and the bearing 15.

In embodiments, the seal assembly 17 comprises a rotary seal member 31 constrained, i.e., connected to the rotary shaft 5 for rotation therewith and to avoid axial displacements of the rotary seal member 31 along the rotary shaft 5. As understood herein, "constrained to the rotary shaft" means that the rotary seal member 31 rotates with the shaft 5 as a single body. Connection, i.e., fastening of the rotary seal member 31 to the rotary shaft 5 can be obtained in any suitable manner, for instance by welding, slip fitting, friction fitting, adhesive, or the like. In other embodiments, connection of the rotary seal member 31 to the rotary shaft 5 can also be obtained with screws, pins, clamps, keys, tabs, splined profiles, or the like. By way of non-limiting example, in Fig. 2 the mechanical connection between rotary shaft 5 and rotary seal member 31 is schematically represented by screws 33.

The rotary seal member 31 includes a shaft sleeve, having a cylindrical through hole for the rotary shaft 5, and a conical outer surface 35, i.e. a conical male surface. The conical outer surface 35 is coaxial to shaft 5, i.e. the axis whereof coincides with the rotation axis A-A of the rotary shaft 5 and of the compressor rotor. The conical outer surface 35 surrounds an inner cylindrical surface 36 of the rotary seal member 31. One or more stationary seal members, such as O-rings 37, can be positioned between the inner cylindrical surface 36 and the rotary shaft 5.

The conical outer surface 35 of the rotary seal member 31 extends from a first end facing the high-pressure region HP to a second end facing the low-pressure region LP. The conical outer surface 35 has a circular cross-section with a variable diameter. The first end which faces the high-pressure region HP has a diameter larger than the second end, i.e., the ideal vertex of the conical outer surface 35 is located opposite the high-pressure region HP. In other, currently less preferred embodiments the position of the conical outer surface 35 with respect to the high-pressure region and the low pressure region can be reversed; i.e. the large-diameter end of the conical outer surface 35 can face the low-pressure region and the small-diameter end of the conical outer surface 35 can face the high-pressure region.

The seal assembly 17 further includes a stationary porous seal member 41, which is substantially co-axial to the rotary seal member 31. As understood herein, "substantially coaxial" means that the stationary porous seal member 41 and the rotary seal member 31 are coaxial within acceptable mechanical tolerances. These may vary depending upon the specific application. In general terms, the mutual position of the geometrical axes of the conical surfaces of the rotary seal member 31 and of the stationary porous seal member 41 may depart from a strict coaxial condition both in terms of eccentricity, as well as in terms of mutual inclination. The eccentricity of the two axes may be within a range from 0% to 5% of the maximum diameter of the mutually facing conical surfaces. The parallelism error, i.e., the angular offset may be between 0° and 5°, preferably between 0° and 2° or less, for instance.

The term "stationary" as used herein means that the stationary porous seal member 41 is not rotating with the rotary shaft 5 around the rotation axis A-A. The stationary porous seal member 41 may, however, vibrate or oscillate around a stationary position. For instance, the stationary porous seal member 41 may perform limited angular displacements within a range of 0°-2° or less, due to mechanical tolerances.

Moreover, the stationary porous seal member 41 may perform limited displacements in the axial direction, i.e., in a direction parallel to the rotation axis A-A of the rotary shaft 5. The axial displacement may be caused by thermal expansion of the turbomachinery. The displacement may range from 0 to 20 mm, for instance, and generally depends upon the length of the axis of the turbomachine.

Additionally, as will be described in greater detail later on, the stationary porous seal member 41 is adapted to perform small movements with respect to the rotatory seal member 31 in the direction of the rotation axis A-A of the rotary shaft 5, to form a gap between the conical inner surface of the stationary porous seal member 41 and the conical outer surface 35 of the rotary seal member 31, to prevent mutual contact therebetween when the rotary shaft 5 is rotating. This mutual displacement between opposite facing conical surfaces may be in the range between 1 micrometer and 1000 micrometers or less, for instance between 1 micrometer and 500 micrometers or less, preferably less than 300 micrometers, even more preferably less than 200 micrometers.

The stationary porous seal member 41 can include a body of porous material, for instance made of a sintered material. In embodiments, the sintered material can be selected among carbon, graphite, alumina, tungsten carbide, or the like. In other embodiments, the body of porous material can be manufactured by additive manufacturing, with a suitable porous structure.

In the embodiment of Fig. 2, the stationary porous seal member 41 is entirely formed of porous material, but in other embodiments, not shown, for instance if the stationary porous seal member 41 is manufactured by additive manufacturing, the stationary porous seal member 41 may include porous and non-porous regions.

In the present description and in the attached claims, the term "porous" referred to the stationary porous seal member 41 means that seal gas which is injected in the seal will migrate through the stationary seal member 41 under a pressure differential.

In the embodiment of Fig.2, the stationary porous seal member 41 includes a conical female surface 43, i.e., a conical inner surface 43. The conical inner surface 43 surrounds the conical outer surface 35 of the rotary seal member 31, i.e. extends around the rotary seal member 31, and is substantially coaxial therewith, in the sense defined above. In use, a gap 45 forms between the conical inner surface 43 and the conical outer surface 35 as will be explained here below.

The conical inner surface 43 of the stationary porous seal member 41 extends from a first end facing the high-pressure region HP to a second end facing the low-pressure region LP. The conical inner surface 43 has a circular cross-section with a variable diameter, the first end having a diameter larger than the second end, i.e. the ideal vertex of the conical inner surface 43 is located opposite the high-pressure region HP. In other, currently less preferred embodiments, the large-diameter end of the conical inner surface 43 faces the low-pressure region and the small-diameter end of the conical inner surface 43 faces the high-pressure region.

In the embodiment of Fig.2 the stationary porous seal member 41 is housed in an annular housing 47 which surrounds the stationary porous seal member 41 and the rotary seal member 31. The stationary porous seal member 41 has an external surface in sealing contact with the annular housing 47. In the embodiment of Fig. 2 the external surface of the stationary porous seal member 41 includes a main cylindrical outer surface 49 coaxial with the conical inner surface 43, and two end planar surfaces 51, 53. The main cylindrical outer surface 49 and the end planar surfaces 51, 53 are in sealing contact with the inner surface of the annular housing 47. In this way pressurized seal gas delivered to the stationary porous seal member 41 will be prevented from leaking through the side surfaces 49, 51, 53.

The annular housing 47 comprises at least one seal gas inlet port 55. In preferred embodiments, a plurality of seal gas inlet ports 55 are distributed annularly around the rotation axis A-A of the rotary shaft 5. In preferred embodiments, the seal gas inlet ports 55 are distributed with a constant angular pitch around the rotation axis A-A. The seal gas inlet ports 55 are arranged adjacent or near the end of the stationary porous seal member 41 that faces the high-pressure side, and opposite the end of the conical inner surface 43 that faces the low-pressure side.

In the embodiment shown, the stationary porous seal member 41 is resiliently biased in an axial direction, i.e., in the direction of the geometrical axis of the conical surfaces 35, 43, such that the conical inner surface 43 is forced against the conical outer surface 35.

In some embodiments, an elastic member pushes the stationary porous seal member 41 against the rotary seal member 31. In embodiments, the elastic member may include one or more resilient elements, such as compression springs. In Fig.2 the elastic member includes a plurality of compression springs 57 arranged around the axis A-A. In the embodiment of Fig. 2 the springs 57 are arranged between the annular housing 47 and a ring casing 59, in which the annular housing 47 is arranged. The ring casing 59 can be fixedly mounted in the casing 5 of the compressor 1.

As shown in Fig. 2, the axial extension of the annular housing 47 is less than the axial extension of an inner seat 61 formed in the ring casing 59, in which the annular housing 47 is slidingly housed. In this way, sufficient axial clearance exists between the annular housing 47 and the ring casing 49, allowing the annular housing 47 to move in an axial direction, i.e. in the direction of the rotation axis A-A of the rotary shaft 5. In inoperative conditions, when no pressurized seal gas is delivered to the seal assembly 17, the springs 57 push the stationary porous seal member 41 in a rest position in abutment against the rotary seal member 31. In the rest position the conical inner surface 43 contacts the conical outer surface 35.

The radial dimension of the ring casing 59 is such that a radial clearance is available between the annular housing 47 and the ring casing 59, as shown in 62.

Balancing gaskets 63, 65 are arranged between the annular housing 47 and the ring casing 59. The gaskets 63, 65 allow some degree of axial and radial displacements of the annular housing 47 inside the seat 61 of the ring casing 59.

At least one aperture 67 in the ring casing 59 is fluidly coupled directly or indirectly to a source of pressurized seal gas and is adapted to deliver pressurized seal gas towards the seal gas inlet ports 55. The source of pressurized seal gas can be any source of sufficiently clean gas at a pressure higher than the pressure in the high-pressure region HP. In some embodiments, the pressurized seal gas can be process gas diverted from the delivery side of the compressor 1 and suitably pre-treated in a pretreatment unit 71, as schematically shown in Fig.1, for instance. In other embodiments, a dedicated seal gas source can be foreseen for this purpose, for instance, a nitrogen source.

In use, pressurized seal gas is delivered through aperture 67 in the ring casing 59 and is forced to enter the seal gas inlet ports 55. The porous structure of the stationary porous seal member 41 causes pressurized seal gas to migrate therethrough and leak from the conical inner surface 43. The pressure of the seal gas generates a hydrostatic lift with an axial component that counter-acts the elastic force of the elastic member 57 (springs 57). The hydrostatic lift is sufficient to displace the stationary porous sealing member 41 in the direction of the rotation axis A-A with respect to the rotary sealing member 31. Due to said axial displacement the gap 45 is formed between the conical inner surface 43 and the conical outer surface 35. The dimension of the conical gap 45 is determined by the balance between the hydrostatic force generated by the pressurized seal gas, the axial thrust applied by the elastic member 57, as well as the force acting on the axially displaceable stationary porous seal member 41 and resulting from the differential pressure between the high-pressure region HP and the low-pressure region LP.

The axial clearance in the ring casing 59 allows the axial housing 47 to move in the axial direction against the elastic thrust of the elastic member 57. The gaskets 63 and 65 prevent gas leakages between the ring casing 59 and the annular housing 47, and the stationary porous seal member 41 can thus "float" on the rotary seal member 31 due to the hydrostatic thrust generated by the pressurized seal gas migrating through the porous structure of the stationary porous seal member 41.

The porous structure of the stationary porous seal member 41 causes a gradual loss of pressure of the pressurized seal gas migrating through the porous structure from the seal gas inlet ports 55 towards the conical inner surface 43. Fig. 2 illustrates isobaric lines, representing the seal gas pressure variation inside the porous structure of the stationary porous seal member 41. The pressure decreases from the first end (facing the high-pressure region HP) towards the second end (facing the low-pressure region LP) of the conical inner surface 43 and the conical outer surface 35. A part of the seal gas escaping the gap 45 leaks towards the high-pressure region HP, i.e., inside the compressor 1, and the remaining part of the seal gas flows towards the low pressure side. A vent, not shown, can be provided to collect the seal gas escaping towards the low-pressure region, preventing dispersion of the de-pressurized seal gas towards the environment. In some embodiments, a further seal can be positioned between the sealing assembly 17 and the outboard bearing 13 and a separation gas can be delivered between the sealing assembly 17 and the outboard bearing 13, to prevent seal gas from contacting the bearing 13.

During stillstand of the compressor 1 no pressurized seal gas through the seal assembly 17, 19 is required, which avoids the need for a continuous seal gas delivery, as conversely required by dry gas seals of the current art. This is achieved by the multiplying effect of the contact pressure between the two mating members 31 and 41 due to the slope of the conical inner surface 43 and conical outer surface 35.

The axial and radial clearance around the annular housing 47 compensates for the wear of the porous material forming the stationary porous seal member 41. Moreover, the axial and radial clearance allows axial and radial displacements of the seal assembly, which may be caused by radial and axial displacements of rotary shaft 5, for instance due to thermal expansion.

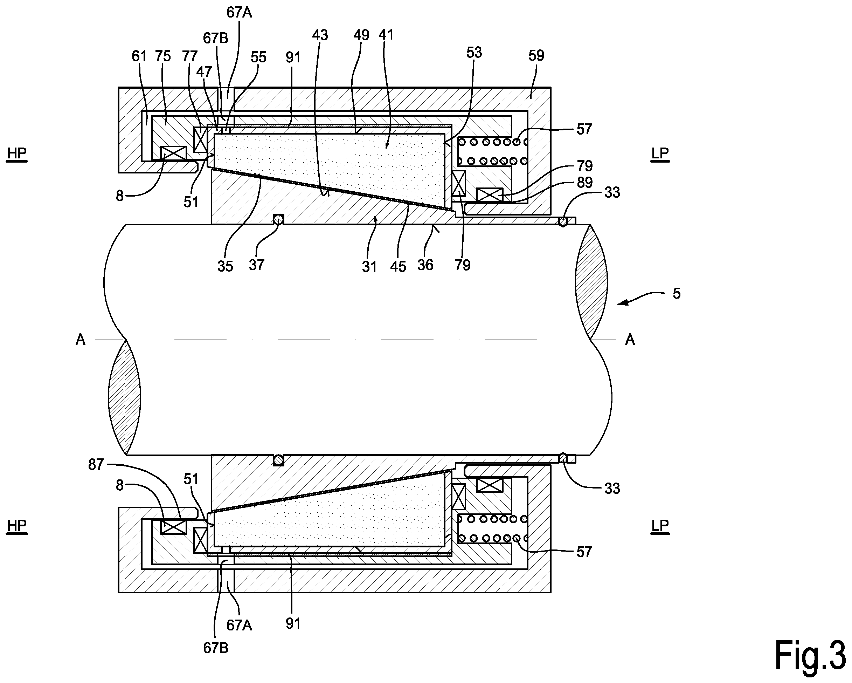

In the embodiment of Fig. 2 the axial and radial displacements of the annular housing 47 and of the stationary porous seal member 41 housed therein are allowed by the capability of gaskets 63, 65 to deform. However, if larger radial and axial displacements of the stationary porous seal member 41 are required or desirable, separate gaskets adapted to allow radial and axial movements can be used. An embodiment of a seal assembly, which is capable of allowing larger radial and axial displacements is shown in Fig. 3. The same reference numbers designate parts corresponding to those of Fig.2. These parts will not be described again in detail.

In the embodiment of Fig. 3, the stationary porous seal member 41 is rigidly constrained in the annular housing 47 in a way similar to Fig.2. Differently from the embodiment of Fig.2, in Fig.3 an intermediate annular component 75 is provided between the ring casing 59 and the annular housing 47, with the stationary porous seal member 41 housed therein. The annular housing 47 is arranged in the intermediate annular component 75 with a radial clearance. Annular balancing gaskets 77, 79 seal the gap between the annular housing 47 and the intermediate annular component 75, allowing a radial displacement of the former inside the latter, to compensate for radial movements of the rotary shaft 5.

The intermediate annular component 75 is housed in the seat 61 formed by the ring casing 59 with an axial clearance, i.e., a space allowing displacements of the unit including the stationary porous seal member 41, the annular housing 47 and the intermediate annular component 75 in the direction of the rotation axis A-A of the rotary shaft 5. Annular balancing gaskets 81, 83 seal the gap between the intermediate annular component 75 and the ring casing 59, allowing axial displacements therebetween. Therefore, the stationary porous seal member 41 can lift from the rotary seal member 31 due to the hydrostatic thrust generated by the pressurized seal gas injected in the seal assembly through apertures 67A and 67B, said gas migrating through the porous structure of the stationary porous seal member 41.

The apertures 67A and 67B in the ring casing 59 and in the intermediate annular component 75 feed pressurized seal gas to the seal gas inlet ports 55. As mentioned above, the seal gas can be pressurized process gas diverted from the deliver side of the compressor 1. Alternatively or in addition, a separate source of pressurized seal gas can be foreseen.

The seal gas migrating through the porous structure of the stationary porous seal member 41 generates a hydrostatic thrust, which is sufficient to displace the stationary porous seal member 41 and the rotary seal member 31 one with respect to the other in the direction of rotation axis A-A of the shaft 5, thus forming the gap 45. As in the embodiment of Fig.2 described above, the value of the thrust required to lift the stationary porous seal member 41 from the rotary seal member 31 depends upon the differential pressure across the seal assembly and upon the total biasing force applied by the elastic member 57 (e.g. spings 57).

By providing separate sets of gaskets 77, 79 and 81, 83, larger axial and radial displacements of the stationary porous seal member 41 with respect to the rotary seal member 31 are possible.

Some or all the surfaces of the above-described seal assembly can be provided with a hardened coating, to reduce wear of surfaces in mechanical contact. In some embodiments, hardening can be provided on the conical outer surface 35 of the rotary seal member 31 and/or on the conical inner surface 43 of the stationary porous seal member 41. In addition or alternatively, some surfaces or surface portions of the members of the seal assembly which are in mutual sliding contact can be hardened, such as in the areas labeled 87 and 89 in Fig.3. In some embodiments hardness above 30 HRC, preferably above 70 HRC or higher can be envisaged. Any known hardening technique adapted to achieve the desired hardness value can be used. For instance, suitable hardening techniques include nitriding, tungsten/chromium carbide coatings or the like.

In some embodiments an anelastic feature can be positioned between adjacent components which may perform mutual displacements in radial direction, e.g. due to vibrations induced by rotation of the compressor 1. For instance, an anelastic feature, such as an anelastic coating 91, can be arranged between the outer surface of the annular housing 47 and the intermediate annular component 75. The anelastic feature 91 is adapted to damp vibrations arising during rotation of the rotary shaft 5, and thus reduce noise and wear.

Certain exemplary embodiments have been described to provide an overall understanding of the principles of the structure, function and use of the systems, devices and methods disclosed herein. One or more examples of these embodiments are illustrated in the accompanying drawings. Those skilled in the art will understand that the systems, devices and methods specifically described herein and illustrated in the accompanying drawings are non-limiting exemplary embodiments and that the scope of the present invention is defined solely by the claims.

## Claims

1. A shaft seal assembly (17,19) configured to sealingly separate a high-pressure region and a low-pressure region in a rotary equipment (1), the shaft seal assembly comprising:
a rotary seal member (31) adapted to be drivingly coupled to a rotary shaft (5) of the rotary equipment for co-rotation therewith;
a stationary porous seal member (41) adapted to be coupled to a stationary housing of the rotary equipment and extending around the rotary seal member (31); and
at least a seal gas inlet port (55) adapted to communicate a pressurized seal gas to the stationary porous seal member (41);
**characterised in that**
the rotary seal member (31) has a conical outer sealing surface (35) and the stationary porous seal member (41) has a conical inner sealing surface (43), wherein the conical inner sealing surface (43) faces the conical outer sealing surface (35).

2. The shaft seal assembly of claim 1, wherein the conical outer sealing surface (35) has a first end adapted to face the high-pressure region and a second end adapted to face the low-pressure region, the first end having a larger diameter than the second end; and wherein the conical inner sealing surface (43) has a respective first end adapted to face the high-pressure region and a second end adapted to face the low-pressure region, the first end having a larger diameter than the second end.

3. The shaft seal assembly of claim 1, wherein the conical outer sealing surface (35) has a first end adapted to face the high-pressure region and a second end adapted to face the low-pressure region, the first end having a diameter smaller than the second end; and wherein the conical inner sealing surface (43) has a respective first end adapted to face the high-pressure region and a second end adapted to face the low-pressure region, the first end having a smaller diameter than the second end.

4. The shaft seal assembly of claim 2 or 3, wherein the at least one seal gas inlet port (55) is located near the first end of the conical inner sealing surface (43).

5. The shaft seal assembly of one or more of the preceding claims, further comprising an elastic member (57) adapted to axially push the conical inner sealing surface (43) towards the conical outer sealing surface (35).

6. The shaft seal assembly of claim 5, wherein in use the pressurized seal gas flows through the stationary porous seal member (41) between the conical inner sealing surface (43) and the conical outer sealing surface (35), such as to balance an axial thrust of the elastic member on the stationary porous seal member (41), forming a gap between the conical inner sealing surface (43) and the conical outer sealing surface (35).

7. The shaft seal assembly of claim 6, wherein in use seal gas pressure in the gap decreases from the first end towards the second end.

8. The shaft seal assembly of one or more of the preceding claims, wherein the stationary porous seal member (41) is housed in a ring casing (59) and axially movable therein.

9. The shaft seal assembly of claim 8, wherein the stationary porous seal member (41) is radially movable in the ring casing (59).

10. The shaft seal assembly of claim 8 or 9, wherein the stationary porous seal member (41) is rigidly constrained to an annular housing (47) retained in the ring casing (59).

11. The shaft seal assembly of claim 10, wherein the annular housing (47) is retained in the ring casing (59) with an axial and radial clearance to move within the ring casing (59) in an axial and in a radial direction.

12. The shaft seal assembly of claim 10, wherein the annular housing (47) is mounted in an intermediate annular component (75) with a radial clearance with respect to the intermediate annular component (75), and wherein the intermediate annular component (75) is retained in the ring casing (59) with an axial clearance.

13. The shaft seal assembly of claim 10 or 11, wherein balancing gaskets (63,65) are arranged between the ring casing (59) and the annular housing (47).

14. The shaft seal assembly of claim 12, wherein balancing gaskets (77, 79,81,83) are arranged between the intermediate annular component (75) and the ring casing (59) and between the annular housing (47) and the intermediate annular component (75).

15. The shaft seal assembly of one or more of the preceding claims, wherein the stationary porous seal member (41) has an outer cylindrical surface coaxial to the conical inner sealing surface (43).

16. The shaft seal assembly of one or more of the preceding claims, wherein the conical outer surface (35) is integral with a shaft sleeve adapted to be angularly coupled to a rotary shaft (5).

17. The shaft seal assembly of one or more of the preceding claims, comprising a plurality of seal gas inlet ports (55) circumferentially arranged around the conical inner sealing surface (43), preferably with a constant angular pitch.

18. The shaft seal assembly of one or more of the preceding claims, comprising a hardening treatment on at least some surfaces subject to mechanical contact.

19. The shaft seal assembly of one or more of the preceding claims, further including an anelastic feature (91) between two components thereof.

20. A rotary equipment (1) including a stationary casing (3) and a shaft (5) supported for rotation in the casing (3); comprising a shaft seal assembly (17,19) according to one or more of the preceding claims, arranged between a high-pressure region and a low-pressure region.

## Patentansprüche

1. Wellenabdichtungsanordnung (17, 19), die konfiguriert ist, um einen Hochdruckbereich und einen Niederdruckbereich in einer Drehvorrichtung (1) abdichtend zu trennen, die Wellenabdichtungsanordnung umfassend:
ein Gleitabdichtungselement (31), das angepasst ist, um mit einer Drehwelle (5) der Drehvorrichtung zum gemeinsamen Drehen mit dieser antriebsverbunden zu sein;
ein stationäres poröses Abdichtungselement (41), das angepasst ist, um mit einem stationären Gehäuse der Drehvorrichtung verbunden zu werden, und sich um das Gleitabdichtungselement (31) erstreckt; und
mindestens eine Abdichtungsgaseinlassöffnung (55), die angepasst ist, um ein Abdichtungsdruckgas an das stationäre poröse Abdichtungselement (41) zu übertragen;
**dadurch gekennzeichnet, dass**
das Gleitabdichtungselement (31) eine konische äußere Abdichtungsoberfläche (35) aufweist und das stationäre poröse Abdichtungselement (41) eine konische innere Abdichtungsoberfläche (43) aufweist, wobei die konische innere Abdichtungsoberfläche (43) der konischen äußeren Abdichtungsoberfläche (35) zugewandt ist.

2. Wellenabdichtungsanordnung nach Anspruch 1, wobei die konische äußere Abdichtungsoberfläche (35) ein erstes Ende, das angepasst ist, um dem Hochdruckbereich zugewandt zu sein, und ein zweites Ende aufweist, das angepasst ist, um dem Niederdruckbereich zugewandt zu sein, wobei das erste Ende einen größeren Durchmesser als das zweite Ende aufweist; und wobei die konische innere Abdichtungsoberfläche (43) ein jeweiliges erstes Ende, das angepasst ist, um dem Hochdruckbereich zugewandt zu sein, und ein zweites Ende aufweist, das angepasst ist, um dem Niederdruckbereich zugewandt zu sein, wobei das erste Ende einen größeren Durchmesser als das zweite Ende aufweist.

3. Wellenabdichtungsanordnung nach Anspruch 1, wobei die konische äußere Abdichtungsoberfläche (35) ein erstes Ende, das angepasst ist, um dem Hochdruckbereich zugewandt zu sein, und ein zweites Ende aufweist, das angepasst ist, um dem Niederdruckbereich zugewandt zu sein, wobei das erste Ende einen kleineren Durchmesser als das zweite Ende aufweist; und wobei die konische innere Abdichtungsoberfläche (43) ein jeweiliges erstes Ende, das angepasst ist, um dem Hochdruckbereich zugewandt zu sein, und ein zweites Ende aufweist, das angepasst ist, um dem Niederdruckbereich zugewandt zu sein, wobei das erste Ende einen kleineren Durchmesser als das zweite Ende aufweist.

4. Wellenabdichtungsanordnung nach Anspruch 2 oder 3, wobei die mindestens eine Abdichtungsgaseinlassöffnung (55) sich in der Nähe des ersten Endes der konischen inneren Abdichtungsoberfläche (43) befindet.

5. Wellenabdichtungsanordnung nach einem oder mehreren der vorstehenden Ansprüche, ferner umfassend ein elastisches Element (57), das angepasst ist, um die konische innere Abdichtungsoberfläche (43) in Richtung der konischen äußeren Abdichtungsoberfläche (35) axial zu drücken.

6. Wellenabdichtungsanordnung nach Anspruch 5, wobei das Abdichtungsdruckgas in Verwendung durch das stationäre poröse Abdichtungselement (41) zwischen der konischen inneren Abdichtungsoberfläche (43) und der konischen äußeren Abdichtungsoberfläche (35) derart strömt, dass ein axialer Schub des elastischen Elements an dem stationären porösen Abdichtungselement (41) ausgeglichen wird, wobei ein Spalt zwischen der konischen inneren Abdichtungsoberfläche (43) und der konischen äußeren Abdichtungsoberfläche (35) ausgebildet wird.

7. Wellenabdichtungsanordnung nach Anspruch 6, wobei der Abdichtungsgasdruck in Verwendung in dem Spalt von dem ersten Ende in Richtung des zweiten Endes abnimmt.

8. Wellenabdichtungsanordnung nach einem oder mehreren der vorstehenden Ansprüche, wobei das stationäre poröse Abdichtungselement (41) in einem Ringgehäuse (59) untergebracht und darin axial bewegbar ist.

9. Wellenabdichtungsanordnung nach Anspruch 8, wobei das stationäre poröse Abdichtungselement (41) in dem Ringgehäuse (59) radial bewegbar ist.

10. Wellenabdichtungsanordnung nach Anspruch 8 oder 9, wobei das stationäre poröse Abdichtungselement (41) an einem ringförmigen Gehäuse (47) starr befestigt ist, das in dem Ringgehäuse (59) gehalten wird.

11. Wellenabdichtungsanordnung nach Anspruch 10, wobei das ringförmige Gehäuse (47) in dem Ringgehäuse (59) mit einem axialen und radialen Abstand gehalten wird, um sich innerhalb des Ringgehäuses (59) in einer axialen und in einer radialen Richtung zu bewegen.

12. Wellenabdichtungsanordnung nach Anspruch 10, wobei das ringförmige Gehäuse (47) in einer ringförmigen Zwischenkomponente (75) mit einem radialen Abstand zu der ringförmigen Zwischenkomponente (75) montiert ist und wobei die ringförmige Zwischenkomponente (75) mit einem axialen Abstand in dem Ringgehäuse (59) gehalten wird.

13. Wellenabdichtungsanordnung nach Anspruch 10 oder 11, wobei Ausgleichsdichtungen (63, 65) zwischen dem Ringgehäuse (59) und dem ringförmigen Gehäuse (47) eingerichtet sind.

14. Wellenabdichtungsanordnung nach Anspruch 12, wobei Ausgleichsdichtungen (77, 79, 81, 83) zwischen der ringförmigen Zwischenkomponente (75) und dem Ringgehäuse (59) und zwischen dem ringförmigen Gehäuse (47) und der ringförmigen Zwischenkomponente (75) eingerichtet sind.

15. Wellenabdichtungsanordnung nach einem oder mehreren der vorstehenden Ansprüche, wobei das stationäre poröse Abdichtungselement (41) eine äußere zylindrische Oberfläche aufweist, die zu der konischen inneren Abdichtungsoberfläche (43) koaxial ist.

16. Wellenabdichtungsanordnung nach einem oder mehreren der vorstehenden Ansprüche, wobei die konische Außenoberfläche (35) mit einer Wellenhülse integral ausgebildet ist, die angepasst ist, um mit einer Drehwelle (5) winkelmäßig gekoppelt zu werden.

17. Wellenabdichtungsanordnung nach einem oder mehreren der vorstehenden Ansprüche, umfassend eine Vielzahl von Abdichtungsgaseinlassöffnungen (55), die um die konische innere Abdichtungsoberfläche (43) herum, vorzugsweise mit einem konstanten Winkelabstand, kreisförmig eingerichtet sind.

18. Wellenabdichtungsanordnung nach einem oder mehreren der vorstehenden Ansprüche, umfassend eine Härtungsbehandlung an mindestens einigen Oberflächen, die mechanischem Kontakt ausgesetzt sind.

19. Wellenabdichtungsanordnung nach einem oder mehreren der vorstehenden Ansprüche, die ferner ein unelastisches Merkmal (91) zwischen zwei Komponenten davon einschließt.

20. Drehvorrichtung (1), die ein stationäres Gehäuse (3) und eine Welle (5) einschließt, die in dem Gehäuse (3) drehbar gelagert ist; umfassend eine Wellenabdichtungsanordnung (17, 19) nach einem oder mehreren der vorstehenden Ansprüche, die zwischen einem Hochdruckbereich und einem Niederdruckbereich eingerichtet ist.

## Revendications

1. Ensemble joint d'arbre (17,19) conçu pour séparer de manière étanche une région haute pression et une région basse pression dans un équipement rotatif (1), l'ensemble joint d'arbre comprenant :
un élément joint rotatif (31) adapté pour être accouplé par entraînement à un arbre rotatif (5) de l'équipement rotatif pour une co-rotation avec celui-ci ;
un élément joint poreux stationnaire (41) adapté pour être accouplé à un logement stationnaire de l'équipement rotatif et s'étendant autour de l'élément joint rotatif (31) ; et
au moins un orifice d'entrée de gaz de joint (55) adapté pour communiquer un gaz de joint sous pression à l'élément joint poreux stationnaire (41) ;
**caractérisé en ce que**
l'élément joint rotatif (31) a une surface d'étanchéité externe conique (35) et l'élément joint poreux stationnaire (41) a une surface d'étanchéité interne conique (43), dans lequel la surface d'étanchéité interne conique (43) fait face à la surface d'étanchéité externe conique (35).

2. Ensemble joint d'arbre selon la revendication 1, dans lequel la surface d'étanchéité externe conique (35) a une première extrémité adaptée pour faire face à la région haute pression et une seconde extrémité adaptée pour faire face à la région basse pression, la première extrémité ayant un diamètre plus grand que la seconde extrémité ; et dans lequel la surface d'étanchéité interne conique (43) a une première extrémité respective adaptée pour faire face à la région haute pression et une seconde extrémité adaptée pour faire face à la région basse pression, la première extrémité ayant un diamètre plus grand que la seconde extrémité.

3. Ensemble joint d'arbre selon la revendication 1, dans lequel la surface d'étanchéité externe conique (35) a une première extrémité adaptée pour faire face à la région haute pression et une seconde extrémité adaptée pour faire face à la région basse pression, la première extrémité ayant un diamètre plus petit que la seconde extrémité ; et dans lequel la surface d'étanchéité interne conique (43) a une première extrémité respective adaptée pour faire face à la région haute pression et une seconde extrémité adaptée pour faire face à la région basse pression, la première extrémité ayant un diamètre plus petit que la seconde extrémité.

4. Ensemble joint d'arbre selon la revendication 2 ou 3, dans lequel l'au moins un orifice d'entrée de gaz de joint (55) est situé près de la première extrémité de la surface d'étanchéité interne conique (43).

5. Ensemble joint d'arbre selon l'une ou plusieurs des revendications précédentes, comprenant en outre un élément élastique (57) adapté pour pousser axialement la surface d'étanchéité interne conique (43) vers la surface d'étanchéité externe conique (35).

6. Ensemble joint d'arbre selon la revendication 5, dans lequel, lors de l'utilisation, le gaz de joint sous pression s'écoule à travers l'élément joint poreux stationnaire (41) entre la surface d'étanchéité interne conique (43) et la surface d'étanchéité externe conique (35), de manière à équilibrer une poussée axiale de l'élément élastique sur l'élément joint poreux stationnaire (41), en formant un espace entre la surface d'étanchéité interne conique (43) et la surface d'étanchéité externe conique (35).

7. Ensemble joint d'arbre selon la revendication 6, dans lequel, lors de l'utilisation, la pression du gaz de joint dans l'espace diminue de la première extrémité vers la seconde extrémité.

8. Ensemble joint d'arbre selon l'une ou plusieurs des revendications précédentes, dans lequel l'élément joint poreux stationnaire (41) est logé dans un boîtier annulaire (59) et est mobile axialement à l'intérieur de celui-ci.

9. Ensemble joint d'arbre selon la revendication 8, dans lequel l'élément joint poreux stationnaire (41) est mobile radialement dans le boîtier annulaire (59).

10. Ensemble joint d'arbre selon la revendication 8 ou 9, dans lequel l'élément joint poreux stationnaire (41) est rigidement contraint à un logement annulaire (47) retenu dans le boîtier annulaire (59).

11. Ensemble joint d'arbre selon la revendication 10, dans lequel le logement annulaire (47) est retenu dans le boîtier annulaire (59) avec un jeu axial et radial pour se déplacer à l'intérieur du boîtier annulaire (59) dans une direction axiale et dans une direction radiale.

12. Ensemble joint d'arbre selon la revendication 10, dans lequel le logement annulaire (47) est monté dans un composant annulaire intermédiaire (75) avec un jeu radial par rapport au composant annulaire intermédiaire (75), et dans lequel le composant annulaire intermédiaire (75) est retenu dans le boîtier annulaire (59) avec un jeu axial.

13. Ensemble joint d'arbre selon la revendication 10 ou 11, dans lequel des joints d'équilibrage (63, 65) sont agencés entre le boîtier annulaire (59) et le logement annulaire (47).

14. Ensemble joint d'arbre selon la revendication 12, dans lequel des joints d'équilibrage (77, 79, 81, 83) sont agencés entre le composant annulaire intermédiaire (75) et le boîtier annulaire (59) et entre le logement annulaire (47) et le composant annulaire intermédiaire (75).

15. Ensemble joint d'arbre selon l'une ou plusieurs des revendications précédentes, dans lequel l'élément joint poreux stationnaire (41) a une surface cylindrique externe coaxiale à la surface d'étanchéité interne conique (43).

16. Ensemble joint d'arbre selon l'une ou plusieurs des revendications précédentes, dans lequel la surface externe conique (35) est intégrée à une chemise d'arbre adaptée pour être accouplée angulairement à un arbre rotatif (5).

17. Ensemble joint d'arbre selon l'une ou plusieurs des revendications précédentes, comprenant une pluralité d'orifices d'entrée de gaz de joint (55) agencés circonférentiellement autour de la surface d'étanchéité interne conique (43), de préférence avec un pas angulaire constant.

18. Ensemble joint d'arbre selon l'une ou plusieurs des revendications précédentes, comprenant un traitement de durcissement sur au moins certaines surfaces soumises à un contact mécanique.

19. Ensemble joint d'arbre selon l'une ou plusieurs des revendications précédentes, comportant en outre une caractéristique anélastique (91) entre deux de ses composants.

20. Équipement rotatif (1) comportant un boîtier stationnaire (3) et un arbre (5) supporté pour rotation dans le boîtier (3) ; comprenant un ensemble joint d'arbre (17,19) selon l'une ou plusieurs des revendications précédentes, agencé entre une région haute pression et une région basse pression.
